Europäisches Patentamt

European Patent Office

Office européen des brevets

(11) Veröffentlichungsnummer: **0 481 282 A2**

# EUROPÄISCHE PATENTANMELDUNG

(21) Anmeldenummer: **91116772.4**

(22) Anmeldetag: **01.10.91**

(51) Int. Cl.5: **B23Q 16/04**, B23Q 1/26

(30) Priorität: **04.10.90 DE 4031381**

(43) Veröffentlichungstag der Anmeldung:
**22.04.92 Patentblatt 92/17**

(84) Benannte Vertragsstaaten:
**CH DE ES FR GB IT LI**

(71) Anmelder: **MAHO Aktiengesellschaft**
**Postfach 1280 Tiroler Strasse 85**
**W-8962 Pfronten(DE)**

(72) Erfinder: **Krug, Willy**
**Ouerallee 6**
**W-3505 Gudensberg(DE)**

(74) Vertreter: **Patentanwälte Beetz sen. - Beetz**
**jun. Timpe - Siegfried - Schmitt-Fumian**
**Steinsdorfstrasse 10**
**W-8000 München 22(DE)**

(54) **Fixiervorrichtung für den Schwenkkopf einer Universal-Fräsmaschine.**

(57) Die Erfindung betrifft eine Fixiervorrichtung für den Schwenkkopf einer Universal-Fräsmaschine, der auf einer vorderen schrägen Stirnwand (4) des Spindelgehäuses (1) um 180° motorisch verdrehbar gelagert und mittels eines zur 45°-Drehachse (9) konzentrischen Hohlzylinderansatzes (17) in einem an der Stirnwand (4) befestigten Außenring (8) geführt ist. Der Schwenkkopf (12) und damit die Vertikalspindel (15) werden in der Arbeitsposition und in der Abstellposition mit Hilfe von motorisch betätigten Arretierelementen fixiert. Die erfindungsgemäße Fixiervorrichtung ist kompakt und konstruktiv einfach ausgebildet. Im Spindelgehäuse (1) ist ein längsgeschlitzter Klemmschieber (24) motorisch verschiebbar angeordnet, der an seinen beiden Schenkeln (31, 33) schräge Auflaufflächen (34, 35) aufweist. Im gehäusefesten Außenring (8) befindet sich eine Ausnehmung (50) zur formschlüssigen Aufnahme der Schenkel (31, 32) des Klemmschiebers (24). Am Hohlzylinderansatz (17) des Schwenkkopfes (12) ist mindestens ein Klemmstein (20, 21) befestigt, dessen schräge Keilflächen (43, 44) zu den Auflaufflächen (34, 35) des Klemmschiebers (24) korrespondieren.

FIG. 1

Die Erfindung betrifft eine Fixiervorrichtung für den Schwenkkopf einer Universal-Fräsmaschine der im Oberbegriff des Patentanspruchs 1 angegebenen Gattung.

Aus der DE-PS 29 44 983 ist eine Universal-Fräsmaschine bekannt, bei welcher die Horizontalspindel im unteren Teil des Spindelgehäuses gelagert und die Vertikalspindel an der vorderen Stirnfläche eines Schwenkkopfes montiert ist.

Am vorderen Ende weist das Spindelgehäuse oberhalb der Horizontalspindel eine Schrägfläche auf, an welcher der Schwenkkopf um eine 45°-Achse verdrehbar gelagert ist, um den Vertikalfräskopf aus seiner Arbeitsposition um 180° in eine obere Abstellposition zu verschwenken. Zur Führung und genauen Positionierung ist am Schwenkkopf an seiner schrägen Lagerfläche ein hohlzylindrischer achszentrierter Ansatz bzw. Kranz vorgesehen, der in eine entsprechende Öffnung in der Schrägfläche des Spindelgehäuses eingreift und an seinem Außenrand eine Kegelverzahnung für den Eingriff eines Antriebsritzels trägt. Die Festlegung des Schwenkkopfes in der Arbeits- und in der Abstellposition erfolgt durch zwei etwa halbkreisförmige Klemmringe, die mit abgeschrägten Stirnflächen in eine ringförmige Klemmnut am hohlzylindrischen Ansatz selbst oder einem mit ihm fest verbundenen Bauteil eingreifen und durch Aktivieren mindestens einer hydraulischen Klemmpatrone gespannt werden. Zur genauen Fixierung der Vertikalspindel in der Bearbeitungsposition sind zusätzliche Indexbolzen im Spindelgehäuse vorgesehen, die während oder nach dem Spannvorgang der Klemmringe durch besondere Stellantriebe in entsprechende Zentrierbohrungen im Schwenkkopf geschoben werden. Dieses technische Konzept hat sich seit Jahren bei einfachen Fräsmaschinen ebenso wie bei komplexen Bearbeitungszentren hervorragend bewährt, weil damit erstmals Werkstücke in einer Aufspannung horizontal und vertikal vollautomatisch bearbeitet werden konnten. Die aus zwei gesonderten Systemen bestehende Spann- und Fixiervorrichtung ist jedoch relativ aufwendig, weil u. a. die Indexbolzen wegen der benötigten hohen Positioniergenauigkeit mit sehr kleinem Spiel geführt werden müssen und einen entsprechend hohen Fertigungsaufwand bedingen. Darüber hinaus können wegen der lediglich reibschlüssigen Wirkung der Klemmringe große Spannkräfte den Schwenkkopf im Bereich des unvermeidlichen Spiels der Indexbolzen verdrehen.

Aufgabe der Erfindung ist es, eine Fixiervorrichtung für den Schwenkkopf einer Fräsmaschine zu schaffen, die bei geringerem Platzbedarf und vermindertem technischen Aufwand eine hochgenaue und feste Positionierung des Schwenkkopfes zumindest in der Bearbeitungsposition der Vertikalspindel gewährleistet.

Diese Aufgabe wird erfindungsgemäß durch die kennzeichnenden Merkmale des Patentanspruchs 1 gelöst.

Durch die erfindungsgemäße Fixiervorrichtung ergibt sich der wesentliche Vorteil, daß der Schwenkkopf mit nur einem Element mit hoher Präzision in der Bearbeitungsposition justiert und durch Formschluß absolut spielfrei in der justierten Position fixiert wird. Darüber hinaus erfordert die neue Fixiervorrichtung einen wesentlich geringeren Herstellungsaufwand, da die beiden bisherigen halbkreisförmigen Klemmringe incl. der mit ihnen zusammenwirkenden Ringnut und auch die Indexbolzen mit ihren jeweiligen Antrieben wegfallen. Von besonderem Vorteil ist ferner, daß der Klemmschieber eine Mehrfachfunktion erfüllt, nämlich eine winkelgenaue Justierung des Schwenkkopfes in seiner Bearbeitungsposition während einer ersten Einschubphase, eine formschlüssige Arretierung in der Ausnehmung des Außenringes durch elastisches Aufweiten seiner Schenkel sowie schließlich eine absolut verdrehspielfreie Verspannung des inneren hohlzylindrischen Ansatzes mit dem Außenring durch die in einer Endphase der Vorschubbewegung erzielte Keilwirkung zwischen seinen schrägen Auflaufflächen und den Schrägflächen des Klemmsteins.

Gemäß einer besonders zweckmäßigen Ausgestaltung der Erfindung besitzt der äußere Lagerring eine zur 45°-Drehachse des Schwenkkopfes koaxiale Innenfläche, die zusammen mit einer koaxialen Außenfläche des inneren Hohlzylinderansatzes ein Gleitlager für den Schwenkkopf bildet. Am freien Ende des Außenrings ist eine konische Ringfläche eingearbeitet, die zusammen mit einer am verbreiterten Endteil des Hohlzylinderansatzes vorgesehenen konvexen Kegelringfläche ein Gleitlager bildet, welches zur Aufnahme von Axial- und Radialkräften geeignet ist. Durch diese bevorzugte Ausführung ergibt sich eine Dreh-Schwalbenschwanz-Führung, die spielarme und leichtgängige Drehbewegungen des Schwenkkopfes sowie dessen hochfeste Fixierung in den jeweiligen Endstellungen gewährleistet. Zweckmäßig weist die konische Lagerfläche des Außenringes zwei gegeneinander winkelversetzte Abstützbereiche bzw. Preßzonen auf, wodurch sich bei eingeschobenem Klemmschieber eine bevorzugte Dreipunktklemmung ergibt. Bei einer Winkelversetzung von 120° gegenüber dem Klemmstein wirken in den Mitten dieser beiden Preßzonen und am Klemmstein gleichgroße Radial- und Klemmkräfte.

Um eine sichere und genaue Fixierung des Schwenkkopfes nicht nur in seiner Bearbeitungsposition, sondern auch in seiner Ablegeposition zu erzielen, sind vorzugsweise zwei Klemmsteine diametral gegenüberliegend in Ausnehmungen des Hohlzylinderansatzes im Bereich seiner Kegelringfläche angeordnet, wobei jeder Klemmstein eine breitere Basis und einen satteldachförmigen Nokken aufweist, an welchem die sich in Längsrichtung konisch erweiternden schrägen Klemmflächen sowie eine ebene Deckfläche ausgebildet sind. Die Klemmsteine können auch einstückig mit dem hohlzylindrischen Ansatz ausgebildet sein.

Die angestrebte Mehrfachfunktion wird in besonderem Maße durch einen parallel zur Längsachse im oberen Teil des Spindelgehäuses angeordneten Klemmschieber erreicht, der gabelförmig ausgebildet ist und elastisch spreizbare Schenkel aufweist, an deren Innenseite die sich in Vorschubrichtung konisch erweiternden schrägen Auflaufflächen vorgesehen sind, welche mit den schrägen und sich in Vorschubrichtung konisch erweiternden Klemmflächen des in Flucht gebrachten Klemmsteins korrespondieren.

Die Vorschub- und Rückzieh-Bewegung des Klemmschiebers wird von einem Stellantrieb erzeugt, der ein Druckmittelzylinder, ein Elektromotor od. dgl. sein kann. Besonders zweckmäßig ist jedoch eine Ausführung, bei welcher der Schieber über einen Spindeltrieb und Zahnräder mit einer Antriebswelle für die Vertikalspindel gekuppelt wird, so daß eine Vorschub- und Rückziehbewegung vom Maschinenantrieb erzeugt wird. Um die Einschub-Kräfte zu begrenzen, ist zweckmäßig ein Drehmomentbegrenzer in den Antriebszug eingeschaltet, der jedoch für die Rückziehbewegung unwirksam ist, um eine Freigabe des Schwenkkopfes auch bei ggf. verklemmtem Schieber sicherzustellen.

Weitere Besonderheiten und Vorzüge der Erfindung lassen sich der folgenden Beschreibung eines in der Zeichnung dargestellten Ausführungsbeispiels entnehmen. Es zeigen:

Fig. 1 das Spindelgehäuse mit Horizontalspindel und der an einem Schwenkkopf montierten Vertikalspindel sowie mit der erfindungsgemäßen Fixiervorrichtung in teilgeschnittener Seitenansicht;

Fig. 2 eine bevorzugte Ausführung des Klemmschiebers und eines Klemmsteins in perspektivischer Darstellung.

In dem horizontal verschiebbar auf einem - nicht dargestellten - Maschinenständer geführten Spindelgehäuse 1 ist eine übliche Horizontalspindel 2 gelagert. Die Stirnwand 4 des Spindelgehäuses verläuft im oberen Teil unter einer Neigung von 45° und weist eine zentrale kreisförmige Öffnung 5 auf, in die der abgewinkelte hohlzylindrische Teil 6 eines in der schrägen Stirnwand 4 z. B. mittels Schrauben 7 befestigten äußeren Lagerringes 8 hineinragt. Dieser Lagerring 8 weist eine zur 45°-Drehachse 9 konzentrische Innenfläche 10, eine daran anschließende konische Ringfläche 11 an dem hohlzylindrischen Teil 6 und eine horizontale Ausnehmung 50 auf.

Auf der schrägen Lagerfläche 4 ist ein Schwenkkopf 12 um die 45°-Achse 9 um 180° verdrehbar gelagert, an dessen einer Stirnfläche 13 ein Vertikalfräskopf 14 mit einer Vertikalspindel 15 montiert ist. Dieser Schwenkkopf 12 liegt mit einer 45°-Auflagefläche 16 auf der Schrägfläche 4 des Spindelgehäuses 1 und auf der mit dieser fluchtenden Außenfläche des äußeren Lagerringes 8 auf. Ein Hohlzylinderansatz 17 ist mittels Schrauben 18 an der Auflagefläche 16 des Schwenkkopfes 12 befestigt, wobei die zur 45°-Achse 9 konzentrische Außenfläche 19 dieses Hohlzylinderansatzes 17 mit der inneren Mantelfläche 10 des Außenrings 8 ein geringes Spiel hat. In dem verbreiterten Endflansch des Hohlzylinderansatzes 17 sind zwei diametral gegenüberliegend angeordnete Klemmsteine 20, 21 befestigt, deren Aussenfläche 42 mit einer konischen Ringfläche fluchtet, welche mit der am Endteil 6 des äußeren Lagerrings 8 ausgebildeten konischen Ringfläche 11 ein Gleitlager bildet.

Im oberen Teil des Spindelgehäuses 1 ist ein Klemmschieber 24 parallel zur Gehäuselängsachse verschiebbar angeordnet, dessen Gewindeschaft 25 zusammen mit einer Mutter 26 einen Spindeltrieb bildet. Diese Mutter 26 ist über eine als Kraftbegrenzer wirkende Kugelrastung 27 mit einem außen gezahnten Ring 28 gekuppelt, der mit einem auf der Antriebswelle 29 für die Vertikalspindel 15 verschiebbaren Schieberad 30 in Eingriff steht.

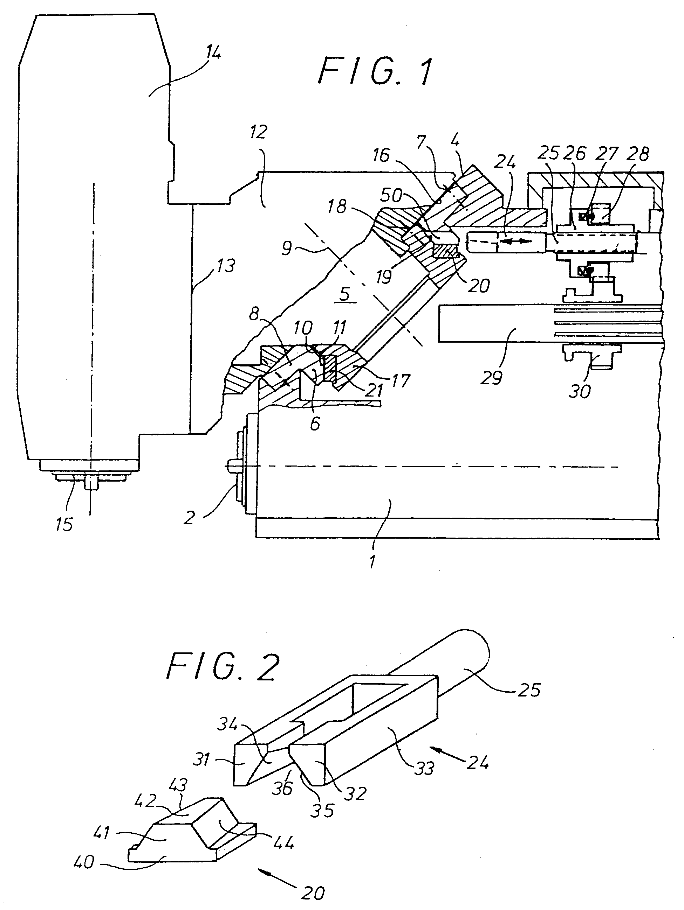

Wie aus Fig. 2 ersichtlich, ist der im Querschnitt rechteckige Klemmschieber 24 gabelförmig ausgebildet, wobei jeder Schenkel 31, 32 eine vertikale äußere Seitenfläche 33 und in den vorderen verdickten Endabschnitten gegensinnig geneigte Innenflächen 34, 35 aufweisen, die einen sich zum Schieberende hin verbreiternden Keilraum 36 begrenzen.

Der in Fig. 2 im einzelnen dargestellte Klemmstein 20, 21 besitzt eine breitere Basis 40 und einen satteldachförmigen Nocken 41, der oben von einer ebenen Deckfläche 42 und zu beiden Längsseiten von je einer schrägen Keilfläche 43, 44 begrenzt wird. Diese beiden Keilflächen 43, 44 haben bei fluchtender Ausrichtung zum Klemmschieber 24 die gleiche Neigung wie dessen Schrägflächen 34, 35.

Die erfindungsgemäße Fixiervorrichtung arbeitet wie folgt: Wenn der Schwenkkopf 12 durch einen nicht dargestellten Drehantrieb um die 45°-Achse 9 in die Bearbeitunsposition nach Fig. 1 gedreht worden ist, wird durch Betätigen des Schieberads 30 die Antriebsverbindung zwischen der Antriebswelle 29 und dem Spindeltrieb 25, 26 hergestellt, welche den Klemmschieber 24 in die im Außenring ausgearbeitete Ausnehmung 50 einschiebt. Die Form dieser Ausnehmung 50 entspricht der Außenkontur des Klemmschiebers 24, der in dieser Ausnehmung 50 spielarm geführt wird. In einer ersten Bewegungsphase fährt der Klemmschieber in diese Ausnehmung 50 des Außenrings 8 ein, ohne den dann in etwa fluchtend positionierten Nocken 41 des Klemmsteins 20 zu berühren. Bei weiterem Fortschreiten der Klemmschieberbewegung trifft eine seiner Schrägflächen auf die entsprechende Keilfläche des Nockens 41 auf, woraufhin der - noch nicht ausgerichtete - Schwenkkopf 12 um einen geringen Betrag verdreht wird, bis auch die zweite Schrägfläche des Klemmschiebers 24 mit der zugehörigen Keilfläche des Klemmstein-Nockens 41 in Berührung kommt. Der Klemmschieber 24 wird weiter eingeschoben und weitet sich so lange elastisch auf, bis das Spiel zwischen seinen Außenflächen und den Innenflächen der Ausnehmung 50 aufgehoben ist. In diesem Zustand ist der Schwenkkopf winkelgenau justiert, aber noch nicht geklemmt. Anschließend wird der Klemmschieber 24 mit einer vorgegebenen Kraft - im dargestellten Ausführungsbeispiel ca. $15 \times 10^3$ N - fest eingeschoben. Der dabei erzeugte Keilanzug bewirkt ein absolut verdrehspielfreies Verspannen des Hohlzylinderansatzes 17 über den Klemmstein 20 mit dem Außenring 8. Die normal auf die konische Ringfläche des Hohlzylinderansatzes 17 einwirkende Keilkraft bewirkt mit ihrer parallel zur 45°-Drehachse verlaufenden Komponente ein Zusammenpressen der Planflächen von Außenring 8 und Schwenkkopf 12 im oberen Bereich, während die senkrecht zur 45°-Drehachse 9 wirkende Kraftkomponente den Hohlzylinderansatz 17 radial an den gegenüberliegenden Teil der konischen Ringfläche 11 des gehäusefesten Außenrings 8 preßt.

Um eine Dreipunktklemmung zu erreichen, ist die der Ausnehmung 50 diametral gegenüberliegende schräge Ringfläche 11 des Außenrings 8 in einem Winkelbereich von je 90° nach links und rechts um ca. 0,3 mm freigearbeitet, so daß die Mitten der beiden entstehenden Preßzonen nach rechts und links versetzt sind. In den Mitten dieser beiden Preßzonen wirken aufgrund der Winkelversetzung von je 120° gleichgroße Radialkräfte, wie sie vom Klemmschieber radial ausgehen. Gleichgroße Klemmkräfte wirken zwischen den Planflächen 4, 16 von Außenring und Schwenkkopf auch an diesen beiden Preßzonen wegen des halben Kegelwinkels von 45°.

Um die Klemmung zu lösen, wird bei dem dargestellten Ausführungsbeispiel die Drehrichtung des Antriebsmotors und damit auch der Welle 29 umgekehrt, um den Klemmschieber 24 vom Klemmstein 20 zu lösen und aus der Ausnehmung 50 herauszuziehen. Da für den Lösevorgang u. U. hohe Kräfte erforderlich sind, wirkt der einen Kraftbegrenzer bildende Kugelrast nicht in der Rückzugsrichtung, so daß für diesen Vorgang die gesamte Antriebsleistung zur Verfügung steht.

Die Erfindung ist nicht auf das dargestellte Ausführungsbeispiel begrenzt. So kann beispielsweise der Schieber 24 durch einen in beiden Richtungen wirksamen Hydraulikzylinder oder einen anderen geeigneten Stellantrieb bewegt werden.

**Patentansprüche**

1. Fixiervorrichtung für den Schwenkkopf einer Universal-Fräsmaschine, der auf einer vorderen schrägen Stirnwand des Spindelgehäuses um 180° motorisch verdrehbar gelagert, mittels eines zur 45°-Drehachse konzentrischen Hohlzylinderansatzes in einem an der Stirnwand befestigten Außenring geführt und durch motorisch betätigte Arretierelemente in der Arbeitsposition und in der Abstellposition der am Schwenkkopf stirnseitig montierten Vertikalspindel genau arretierbar ist,

   **dadurch gekennzeichnet**,

   daß im Spindelgehäuse (1) ein längsgeschlitzter Klemmschieber (24) motorisch verschiebbar angeordnet ist, der an seinen Schenkeln (31, 33) schräge Auflaufflächen (34, 35) aufweist,

   daß in dem gehäusefesten Außenring (8) eine Ausnehmung (50) zur formschlüssigen Aufnahme der Schenkel (31, 32) des Klemmschiebers (24) vorgesehen ist und

   daß am Hohlzylinderansatz (17) des Schwenkkopfes (12) mindestens ein Klemmstein (20, 21) angeordnet ist, dessen schräge Keilflächen (43, 44) zu den Auflaufflächen (34, 35) des Klemmschiebers (24) korrespondieren.

2. Fixiervorrichtung nach Anspruch 1, dadurch gekennzeichnet, daß der gehäusefeste Außenring (8) eine zur Drehachse (45) senkrechte plane Außenfläche (4) und an seinem verbreiterten Ende eine konische Ringfläche (11) aufweist, die mit der planen Auflagefläche (16) des Schwenkkopfes (12) und mit einer gleichgerichteten schrägen Ringfläche am Hohlzylinderansatz (17) Gleitlager für den Schwenkkopf (12) bilden.

3. Fixiervorrichtung nach Anspruch 2, dadurch gekennzeichnet, daß zur Erzielung einer Dreipunkt-Fixierung des Schwenkkopfes (12) die konische Lagerfläche (11) des Außenrings (8) zwei gegeneinander winkelversetzte Abstützbereiche bzw. Preßzonen aufweist.

4. Fixiervorrichtung nach einem der Ansprüche 1 bis 3,
dadurch gekennzeichnet,
daß zwei Klemmsteine (20, 21) diametral gegenüberliegend im Hohlzylinderansatz (17) angeordnet sind, wobei jeder Klemmstein (20, 21) eine breitere Basis (40) und einen satteldachförmigen Nocken (41) mit den sich in Längsrichtung konisch erweiternden Keilflächen (43, 44) und einer ebenen Deckfläche (42) aufweist.

5. Fixiervorrichtung nach einem der Ansprüche 1 bis 4,
dadurch gekennzeichnet,
daß der im Querschnitt rechteckige Klemmschieber (24) gabelförmig ausgebildet ist und elastisch spreizbare Schenkel (31, 32) mit einer vertikalen äußeren Seitenfläche (33) und einer innenseitigen schrägen Auflauffläche (34, 35) aufweist, welche einen sich zum Schieberende hin keilförmig vergrößernden Zwischenraum (36) begrenzen.

6. Fixiervorrichtung nach einem der Ansprüche 1 bis 5,
dadurch gekennzeichnet,
daß der Klemmschieber (24) parallel zur Längsachse im oberen Teil des Spindelgehäuses (1) angeordnet und mit seinem hinteren Schaft (25) über einen Kraftbegrenzer (27) mit einem Stellantrieb verbunden ist.

7. Fixiervorrichtung nach Anspruch 6,
dadurch gekennzeichnet,
daß der Klemmschieber (24) über einen Spindeltrieb (25, 26) mit der Antriebswelle (29) der Arbeitsspindel (15) kuppelbar ist.

8. Fixiervorrichtung nach Anspruch 6,
dadurch gekennzeichnet, daß der Stellantrieb ein Druckmittel-Zylinder ist.

# FIG. 1

# FIG. 2